# EUROPÄISCHE PATENTSCHRIFT

(11) **EP 4 082 680 B1**
(45) Veröffentlichungstag und Bekanntmachung des Hinweises auf die Patenterteilung: **10.04.2024**
(21) Anmeldenummer: 22169793.1
(22) Anmeldetag: 25.04.2022
(51) Int. Cl.: B08B 5/02, B08B 5/04, B60S 3/04, A47L 5/14, A47L 7/00, A47L 9/00, A47L 9/08, A47L 9/24, A47L 9/28, B60S 3/00

(54) **VORRICHTUNG ZUM HANDGEFÜHRTEN; MANUELLEN REINIGEN VON FAHRZEUGEN**
DEVICE FOR MANUALLY CLEANING VEHICLES
DISPOSITIF DE NETTOYAGE MANUEL GUIDÉ É LA MAIN DES VÉHICULES

(30) Priorität: 26.04.2021 DE 202021102217 U
(43) Veröffentlichungstag der Anmeldung: 02.11.2022
(73) Patentinhaber: Clean Unit Vertriebs GmbH, 07570 Harth-Pöllnitz OT Burkersdorf (DE)
(72) Erfinder: Bock, Martin, 07570 Weida (DE)
(74) Vertreter: Meissner Bolte Partnerschaft mbB

(56) Entgegenhaltungen:
- DE-A1-102004 060 774
- DE-A1-102014 103 542
- DE-A1-102015 004 116
- DE-A1-102016 121 482
- DE-C1- 19 608 662
- DE-U1-202015 102 785
- US-A1- 2006 226 259

## Beschreibung

Die Erfindung betrifft eine Vorrichtung zum handgeführten manuellen Reinigen von Fahrzeugen durch Absaugen von Verschmutzungen einerseits sowie andererseits Entfernen von oberflächigen Anhaftungen, einschließlich Wasser- bzw. Feuchtepartikeln, ausgebildet als Saugbläser, umfassend Mittel zum Umschalten zwischen einem Saug- und einem Blasbetrieb, wobei für den Saugbetrieb in einem Saugkanal mit Saugschlauch eine Rückhalte- und Abscheideeinrichtung für angesaugte Verschmutzungen ausgebildet ist und für den Blasbetrieb Druckluft über einen Blaskanal mit Blasschlauch und Blasdüse geführt ist gemäß Anspruch 1.

Aus der EP 3 538 405 B1 ist ein Handblasgerät zum manuellen pneumatischen Trocknen von Oberflächen durch einen Benutzer bekannt, wobei das Handblasgerät eine Flachdüsenvorrichtung zum Ausstoßen von komprimierter Luft aus dem Gerät auf eine zu trocknende Oberfläche aufweist.

Das vorbekannte Handblasgerät besitzt einen Griff zum manuellen Führen der Flachdüsenvorrichtung über die zu trocknende Oberfläche sowie eine Fördereinrichtung zum Fördern der komprimierten Luft zur Flachdüsenvorrichtung.

Die Fördereinrichtung steht mit einem ortsfest angeordneten Hochdruckgebläse in Verbindung.

Das Hochdruckgebläse soll durch die Flachdüsenvorrichtung einen Volumenstrom von 200 - 1000 m3 je Stunde mit einer Strömungsgeschwindigkeit von 50 - 300 m je Sekunde realisieren.

Die Fördereinrichtung umfasst einen flexiblen Schlauch, der das Hochdruckgebläse mit der Flachdüsenvorrichtung verbindet.

In einer Ausführungsform ist die Flachdüse mit einem Flachdüsenschlitz versehen, der eine relativ große Austrittsfläche aufweist. Hierfür weist die Flachdüse einen bevorzugt rechteckigen Flachdüsenschlitz auf.

Der Schlauch mit Flachdüse ist lose geführt und kann auf einem Träger abgelegt werden.

Aus der DE 10 2015 004 116 A1 ist eine Fahrzeugreinigungsvorrichtung bekannt, welche die Möglichkeit sowohl des Erzeugens von Druckluft zum Ausblasen eines Fahrzeuginnenraumes als auch zum Absaugen von Verschmutzungen aufweist. Die dortige Lehre ist im Hinblick auf den Blasvorgang nicht für die Trocknung feuchter Fahrzeugoberflächen vorgesehen. Vielmehr soll lose anhaftender Staub, insbesondere aus einem Fahrzeuginnenraum aufgewirbelt werden, um dann ein Absaugen durchführen zu können. Das Umschalten zwischen Saug- und Blasbetrieb wird über eine aufwändige Ventilanordnung realisiert.

Aus der CN 107695037 A ist eine Vorrichtung zum Entfernen von Verschmutzungen, insbesondere für Motorräder, vorbekannt. Die Vorrichtung umfasst ein Gebläse, das sich innerhalb eines Gehäuses befindet. Am Gehäuse ist ein Trag-griff und eine Luftaustrittsdüse vorhanden. Zusätzlich kann über eine Pumpeinrichtung Reinigungsflüssigkeit zugeführt und auf den zu reinigenden Gegenstand aufgebracht werden.

Besonders bei der Nutzung von automatischen, aber auch Selbstbedienungs-Waschanlagen ist oftmals festzustellen, dass die Reinigungsflüssigkeit, insbesondere das aufgetragene Reinigungswasser zwar die Schmutzpartikel löst und entfernt, jedoch verbleibt in vielen Fällen eine mehr oder weniger großflächige Feuchteschicht auf dem Fahrzeug bzw. dem zu reinigenden Gegenstand. Insbesondere dann, wenn die Lackoberfläche des Fahrzeuges nicht mehr ausreichend in der Lage ist, ein Abperlen zu ermöglichen, ist es erforderlich, manuell, insbesondere mit einem Trockentuch, nachzuarbeiten. Wenn dies nicht möglich ist, wird in vielen Fällen das Fahrzeug in Betrieb genommen und versucht durch Fahrtwind Feuchtepartikel zu entfernen, was jedoch oftmals zu einer anhaltenden Streifenbildung auf den Fahrzeugoberflächen, zum Beispiel den Lackoberflächen oder aber auch auf Fahrzeugscheiben führt.

Auch und insbesondere bei Hinterschneidungen, Rücksprüngen, offenen Verkleidungen, Spoilern oder dergleichen ist es nicht ohne weiteres möglich, sämtliche Feuchtigkeitsreste zu entfernen.

Beim Reinigen von Fahrzeugen, insbesondere in sogenannten Selbstbedienungs-Waschboxen, ist einer der wesentlichen Reinigungsschritte das Absaugen von Oberflächen oder Gegenständen im Fahrzeuginneren, insbesondere von Sitzpolstern, Teppichen, Fußmatten oder dergleichen mehr.

Das Dokument DE-A1-102016121482 offenbart eine handgeführte Vorrichtung für manuelles Reinigen von Fahrzeugen, durch Entfernen von Anhaftungen ausgebildet als Bläser, wobei die Vorrichtung ein mobil ausgestalteter Container aufweist, welcher eine Verdichter und alle weiteren, betriebsnotwendigen, funktionalen Elemente und Baugruppen enthält.

Aus dem Vorgenannten ist es unter Berücksichtigung der Nachteile des Standes der Technik Aufgabe der Erfindung, eine weiterentwickelte Vorrichtung zum handgeführten, manuellen Reinigen von Gegenständen, insbesondere Fahrzeugen, anzugeben, welche es gestattet, mit einem einheitlichen Gebilde sowohl Verschmutzungen abzusaugen als auch oberflächige Anhaftungen, insbesondere Wasser bzw. Feuchtepartikel, zu entfernen. Diesbezüglich ist die Vorrichtung als Saugbläser ausgebildet, umfassend Mittel zum Umschalten zwischen einem Saug- und einem Blasbetrieb.

Die erfindungsgemäße Vorrichtung soll platzsparend und mit einer reduzierten Anzahl funktionaler Elemente realisiert werden, um einen Selbstbedienungsbetrieb, insbesondere in und für Selbstbedienungs-Waschboxen oder aber auch für Werkstätten, Garagen oder dergleichen zu ermöglichen.

Da zum Entfernen von Wasser- oder Feuchtepartikeln der Einsatz von hochkomprimierter Druckluft mit entsprechenden Strömungsraten unumgänglich ist, ist bei der zu schaffenden Vorrichtung dafür zu sorgen, dass insbesondere durch den beabsichtigten Selbstbedienungsbetrieb jedwede Verletzungsgefahr des Benutzers, aber auch die Gefahr einer Beschädigung des behandelten Objektes, insbesondere Fahrzeuges, ausgeschlossen wird.

Die Lösung der Aufgabe der Erfindung erfolgt gemäß der Merkmalskombination nach Anspruch 1, wobei die Unteransprüche mindestens zweckmäßige Ausgestaltungen und Weiterbildungen umfassen.

Unter Beachtung des bekannten Standes der Technik geht die Vorrichtung zum handgeführten, manuellen Reinigen von Gegenständen, insbesondere Fahrzeugen, durch Absaugen von Verschmutzungen einerseits sowie zum Entfernen von Oberflächenanhaftungen einschließlich Wasser bzw. Feuchtepartikeln von einem Saugbläser aus, umfassend Mittel zum Umschalten zwischen einem Saug- und einem Blasbetrieb, wobei für den Saugbetrieb in einem Saugkanal mit Saug-schlauch eine Rückhalte- und Abscheidevorrichtung für angesaugte Verschmutzungen ausgebildet ist.

Für den Blasbetrieb ist Druckluft über einen Blaskanal mit Blasschlauch und Blasdüse geführt.

Erfindungsgemäß ist ein, auch mobil ausgestaltbarer, Container vorgesehen, welcher einen schaltbaren Verdichter zur Erzeugung der für den jeweiligen Betrieb notwendigen Strömung und alle weiteren betriebsnotwendigen, funktionalen Elemente und Baugruppen enthält.

Am Container sind Anschlüsse für mindestens einen Saug- und mindestens einen Blasschlauch angeordnet.

Hierbei ist mindestens der Blasschlauch mittels eines galgenartigen Trägers beweglich gehalten und geführt. Weiterhin sind Mittel zum automatischen Abschalten des Verdichters im Blasbetrieb vorhanden, um ein unkontrolliertes Bewegen oder Wegschleudern des Blasschlauches und/oder der am Schlauch angeschlossenen Blasdüse auszuschließen.

Gemäß der Erfindung umfassen die Mittel zum Abschalten eine Schalteinheit, welche in einem Blasdüsenhaltegriff angeordnet ist, wobei die Schalteinheit ein Anlaufen des Verdichters nur dann ermöglicht, wenn der Blasdüsenhaltegriff sicher vom Nutzer der Vorrichtung handseitig fest umschlossen ist.

Die Schalteinheit kann hier als sogenannter Toter-Mann-Schalter ausgeführt sein.

Die Schalteinheit kann auch so umgesetzt werden, dass ein Blasbetrieb nur dann möglich ist, wenn der Blasdüsenhaltegriff mit zwei Händen umfasst wird.

Die Auslöseschwelle der Schalteinheit in Bezug auf das Abschalten bei Gefahren kann in Abhängigkeit vom anstehenden Druck bzw. der momentanen Strömungsrate der Druckluft gewählt werden.

Die erfindungsgemäße Möglichkeit des automatischen Abschaltens des Verdichters aber auch eines Unterbrechens des Druckluftstromes als mögliche Alternative vermeidet Gefahren, dann, wenn durch Loslassen des Blasdüsenhaltegriffes, sei es absichtlich oder unabsichtlich, der Blasschlauch mit Blasdüsenhaltengriff droht wegzuschleudern bzw. eine unkontrollierte Bewegung droht.

In einer bevorzugten Weiterbildung der Erfindung sind innerhalb der Blasdüse Mittel zum Erzeugen bzw. zum Erzwingen einer Rotations- oder oszillierenden Bewegung der Druckluftströmung in Richtung Düsenaustritt angeordnet.

Es hat sich gezeigt, dass insbesondere bei einer rotierenden oder oszillierenden, richtungswechselnden Strömung ein sehr schnelles und effektives Trocknen einer Fahrzeugoberfläche möglich wird, und zwar ohne dass der jeweilige Benutzer den Blasdüsenhaltegriff und damit die Blasdüse selbst mit einer Vielzahl von hin- und hergehenden Bewegungen über das Fahrzeug bzw. die zu trocknende Oberfläche führen muss.

In einer Ausbildung ist die Blasdüse eine Fächerdüse mit mehreren, quasi fingerartig realisierten Einzeldüsen, die jeweils bezogen auf eine gedachte zentrale Linie unterschiedliche Strömungsrichtungen ermöglichen, so dass eine noch breitere Streuung des Druckluftstrahles und damit eine Bearbeitung einer entsprechenden größeren Flächeneinheit und eines größeren Flächenabschnittes erfolgen kann.

Die Steuerung für den schaltbaren Verdichter ist so ausgeführt, dass eine automatische Anpassung der Verdichterleistung je nach Saug- oder Blasbetrieb realisierbar ist. Diese Maßnahme ermöglicht einen kostensparenden und energiereduzierten Betrieb der Vorrichtung.

Als Verdichter ist insbesondere ein Seitenkanalverdichter eingesetzt, welcher durch Umschalten der Drehrichtung des Antriebsmotors einen Saug- oder Blasbetrieb ermöglicht. Der Saug- sowie der Blaskanal ist über eine T-Verzweigung mit Rückschlagventilen am Verdichter angeschlossen. Je nach entsprechendem Betrieb ist dann entweder strömungsseitig der Saugkanal offen und der Blaskanal geschlossen oder umgekehrt.

Der Einsatz von Magnetventilen kann hierdurch vermieden werden, so dass eine diesbezügliche Fehlerquelle ausgeschlossen ist.

Zur Vereinfachung der Handhabung sind die Funktionen "Saugen" und "Blasen" und die hierfür für den Benutzer erkennbar notwendigen Elemente, insbesondere Bedienelemente, in einer funktionstypischen, einheitlichen Farbe gekennzeichnet oder mit farblichen Beleuchtungsmitteln versehen, so dass Fehlbenutzungen oder Fehlbedienungen weitgehend ausgeschlossen werden. Beispielsweise kann die Funktion "Saugen" mit einer blauen Farbkennzeichnung oder blauen Beleuchtung und die Funktion "Blasen" mit einer roten Farbe oder einer roten Beleuchtung symbolisiert und gekennzeichnet sein.

Dem Druckluftstrom für den Blasbetrieb können Mittel zum Reduzieren der Oberflächenspannung von Wasser und/oder Duftstoffe beigegeben werden. Die Zugabe von oberflächenspannungsreduzierenden Stoffen erleichtert das Trocknen der entsprechenden Oberfläche. Die Zugabe von Duftstoffen machen den manuellen Reinigungs- bzw. Trocknungsvorgang in einer Waschbox für den Benutzer angenehmer.

Wie bereits eingangs dargelegt, ist die erfindungsgemäße Vorrichtung als Gerät zur Selbstbedienung durch den jeweiligen Nutzer ausgelegt, insbesondere als Ergänzung zur Ausrüstung bzw. Ausstattung von Selbstbedienungs-Waschboxen. Selbstverständlich ist der Einsatz diesbezüglich nicht begrenzt. Neben derartigen Waschanlagen kann die Vorrichtung auch an Tankstellen, in Werkstätten oder in der Industrie Anwendung finden.

## Patentansprüche

1. Handgeführte Vorrichtung für manuelles Reinigen von Fahrzeugen, durch Absaugen von Verschmutzungen einerseits sowie andererseits Entfernen von oberflächigen Anhaftungen, einschließlich Wasser- bzw. Feuchtepartikeln, ausgebildet als Saugbläser, umfassend Mittel zum Umschalten zwischen einem Saug- und einem Blasbetrieb, wobei für den Saugbetrieb in einem Saugkanal mit Saugschlauch eine Rückhalte- und Abscheideeinrichtung für angesaugte Verschmutzungen ausgebildet ist und für den Blasbetrieb Druckluft über einen Blaskanal mit Blasschlauch und Blasdüse geführt wird, wobei die Vorrichtung weiterhin ein, mobil ausgestalteter, Container aufweist, welcher einen schaltbaren Verdichter zur Erzeugung der für den jeweiligen Betrieb notwendigen Strömung und alle weiteren, betriebsnotwendigen, funktionalen Elemente und Baugruppen enthält, wobei am Container Anschlüsse für mindestens einen Saug- und mindestens einen Blasschlauch angeordnet sind und hierbei mindestens der Blasschlauch mittels eines galgenartigen Trägers beweglich gehalten und geführt ist, sowie mit Mitteln zum automatischen Abschalten des Verdichters im Blasbetrieb, um ein unkontrolliertes Bewegen oder Wegschleudern des Blasschlauches oder der Blasdüse auszuschließen, wobei die Mittel zum Abschalten eine Schalteinheit umfassen, welche in oder an einem Blasdüsenhaltegriff angeordnet ist, wobei die Schalteinheit ein Anlaufen des Verdichters nur dann ermöglicht, wenn der Blasdüsenhaltegriff sicher vom Nutzer der Vorrichtung handseitig umschlossen ist.

2. Vorrichtung nach Anspruch 1,
**dadurch gekennzeichnet, dass**
innerhalb der Blasdüse Mittel zum Erzwingen einer Rotations- oder oszillierenden Bewegung der Druckluftströmung in Richtung Düsenaustritt angeordnet sind.

3. Vorrichtung nach einem der vorangegangenen Ansprüche,
**dadurch gekennzeichnet, dass**
die Blasdüse als Fächerdüse mit fingerartigen Düsenkanälen zur Aufspreizung des Druckluftstromes ausgebildet ist.

4. Vorrichtung nach einem der vorangegangenen Ansprüche,
**dadurch gekennzeichnet, dass**
eine automatische Anpassung der Verdichterleistung je nach Saug- oder Blasbetrieb realisiert ist.

5. Vorrichtung nach einem der vorangegangenen Ansprüche,
**dadurch gekennzeichnet, dass**
als Verdichter ein Seitenkanalverdichter eingesetzt ist, welcher durch Umschalten der Drehrichtung des Antriebsmotors einen Saug- oder Blasbetrieb ermöglicht und Saug- sowie Blaskanal über eine T-Verzweigung mit Rückschlagventilen am Verdichter angeschlossen sind.

6. Vorrichtung nach einem der vorangegangenen Ansprüche,
**dadurch gekennzeichnet, dass**
die Funktionen "Saugen" und "Blasen" und die hierfür für den Benutzer erkennbar notwendigen Bedienelemente, in einer funktionstypischen, einheitlichen Farbe oder mit farblichen Beleuchtungsmitteln gekennzeichnet sind, so dass Fehlbedienungen oder Fehlbenutzungen weitgehend ausgeschlossen werden.

7. Vorrichtung nach einem der vorangegangenen Ansprüche,
**dadurch gekennzeichnet, dass**
dem Druckluftstrom für den Blasbetrieb Mittel zum Reduzieren der Oberflächenspannung von Wasser oder Duftstoffe beigegeben sind.

8. Vorrichtung nach einem der vorangegangenen Ansprüche,
**dadurch gekennzeichnet, dass**
diese ausgebildet ist als Gerät zur Selbstbedienung durch den jeweiligen Nutzer und als Ergänzung zu Selbstbedienungs-Waschboxen.

## Claims

1. Hand-guided device for manual cleaning of vehicles, by suction of soiling on the one hand and removal of superficial adhesions, including water or moisture particles, on the other hand, designed as a suction blower, comprising means for switching between a suction and a blowing operation, wherein for the suction mode a retention and separation device for sucked-in soiling is formed in a suction channel with suction hose and for the blowing mode compressed air is conducted via a blowing channel with blowing hose and blowing nozzle, wherein the device further comprises a container of mobile design, which contains a switchable compressor for generating the flow required for the respective operation and all other functional elements and assemblies required for operation, wherein connections for at least one suction hose and at least one blowing hose are arranged on the container and in this case at least the blowing hose is movably held and guided by means of a gallows-like support, and having means for automatically switching off the compressor in blowing mode in order to prevent uncontrolled movement or ejection of the blowing hose or the blowing nozzle, wherein the means for switching off comprise a switching unit which is arranged in or on a blowing nozzle holder handle, wherein the switching unit enables the compressor to start up only when the blowing nozzle holder handle is securely enclosed on the hand side by the user of the device.

2. Device according to claim 1, **characterized in that** means for forcing a rotational or oscillating movement of the compressed air flow in the direction of the nozzle outlet are arranged within the blowing nozzle.

3. Device according to one of the preceding claims, **characterized in that** the blowing nozzle is designed as a fan nozzle with finger-like nozzle channels for spreading the compressed air flow.

4. Device according to one of the preceding claims, **characterized in that** an automatic adjustment of the compressor output is implemented depending on the suction or blowing operation.

5. Device according to one of the preceding claims, **characterized in that** a side channel compressor is used as the compressor, which enables suction or blowing operation by switching the direction of rotation of the drive motor and the suction and blowing channels are connected to the compressor via a T-branch with non-return valves.

6. Device according to one of the preceding claims, **characterized in that** the "suction" and "blowing" functions and the operating elements required for this purpose, which are recognizable to the user, are marked in a uniform color typical of the function or with colored lighting means, so that incorrect operation or incorrect use is largely excluded.

7. Device according to one of the preceding claims, **characterized in that** means for reducing the surface tension of water or fragrances are added to the compressed air flow for the blowing operation.

8. Device according to one of the preceding claims, **characterized in that** it is designed as a device for self-service by the respective user and as a supplement to self-service washing boxes.

## Revendications

1. Dispositif guidé à la main pour le nettoyage manuel de véhicules, par aspiration de salissures d'une part, et par élimination d'adhérences superficielles, y compris de particules d'eau ou d'humidité, d'autre part, réalisé sous forme de souffleur/aspirateur,
comprenant des moyens pour commuter entre un mode d'aspiration et un mode de soufflage,
dans lequel
pour le mode d'aspiration, un organe de retenue et de séparation pour les salissures aspirées est formé dans un canal d'aspiration muni d'un tuyau d'aspiration, et, pour le mode de soufflage, de l'air comprimé est acheminé via un canal de soufflage muni d'un tuyau de soufflage et d'une buse de soufflage,
le dispositif comprend en outre un conteneur, de conception mobile, qui comprend un compresseur commutable, destiné à produire le flux nécessaire pour le mode respectif, et tous les autres éléments et modules fonctionnels nécessaires au fonctionnement,
des raccords pour au moins un tuyau d'aspiration et au moins un tuyau de soufflage sont disposés sur le conteneur, et au moins le tuyau de soufflage est maintenu et guidé de manière mobile au moyen d'un support en forme de potence,
et comprenant des moyens de coupure automatique du compresseur en mode de soufflage, afin d'exclure un mouvement ou une éjection incontrôlés du tuyau de soufflage et/ou de la buse de soufflage,
les moyens de coupure comprennent une unité de commutation qui est disposée dans ou sur une poignée de maintien de la buse de soufflage, l'unité de commutation permettant le démarrage du compresseur uniquement lorsque la poignée de maintien de la buse de soufflage est entourée de manière sûre par la main de l'utilisateur du dispositif.

2. Dispositif selon la revendication 1,
**caractérisé en ce que**
des moyens destinés à forcer un mouvement de rotation ou d'oscillation du flux d'air comprimé en direction de la sortie de la buse sont disposés à l'intérieur de la buse de soufflage.

3. Dispositif selon l'une des revendications précédentes,
**caractérisé en ce que**
la buse de soufflage est conçue comme une buse en éventail ayant des canaux de buse en forme de doigts destinés à étaler le flux d'air comprimé.

4. Dispositif selon l'une des revendications précédentes,
**caractérisé en ce que**
une adaptation automatique de la puissance du compresseur est réalisée en fonction du mode d'aspiration ou de soufflage.

5. Dispositif selon l'une des revendications précédentes,
**caractérisé en ce que**
le compresseur utilisé est un compresseur à canal latéral qui permet un mode d'aspiration ou de soufflage en inversant le sens de rotation du moteur d'entraînement, et les canaux d'aspiration et de soufflage sont raccordés au compresseur par une dérivation en T ayant des clapets anti-retour.

6. Dispositif selon l'une des revendications précédentes,
**caractérisé en ce que**
les fonctions "aspirer" et "souffler" et les éléments de manipulation nécessaires à cet effet, reconnaissables par l'utilisateur, sont **caractérisés par** une couleur uniforme typique de la fonction ou par des moyens d'éclairage colorés, de sorte que les erreurs de manipulation ou d'utilisation sont largement exclues.

7. Dispositif selon l'une des revendications précédentes,
**caractérisé en ce que**
des agents de réduction de la tension superficielle de l'eau et/ou des parfums sont ajoutés au flux d'air comprimé pour le mode de soufflage.

8. Dispositif selon l'une des revendications précédentes,
**caractérisé en ce que**
il est conçu comme un appareil, destiné à être utilisé en libre-service par l'utilisateur correspondant, et comme un accessoire, destiné aux stations de lavage en libre-service.
